# EUROPEAN PATENT SPECIFICATION

(11) **EP 1 557 594 B1**
(45) Date of publication and mention of the grant of the patent: **28.01.2009**
(21) Application number: 03758983.5
(22) Date of filing: 28.10.2003
(51) Int. Cl.: F16J 9/20, F02F 5/00

(54) **OIL RING**
ÖLRING
SEGMENT RACLEUR

(30) Priority: 29.10.2002 JP 2002315031; 25.12.2002 JP 2002375603
(43) Date of publication of application: 27.07.2005
(60) Divisional application: 07011122.4
(73) Proprietor: Toyota Jidosha Kabushiki Kaisha, Toyota-shi, Aichi-ken, 471-8571 (JP); Nippon Piston Ring Co., Ltd., Saitama-shi, Saitama 338-8503 (JP)
(72) Inventor: ABE, Tomoaki, TOYOTA JIDOSHA KABUSHIKI KAISHA, Toyota-shi, Aichi 471-8571 (JP); NANNO, Keishi, TOYOTA JIDOSHA KABUSHIKI KAISHA, Toyota-shi, Aichi 471-8571 (JP); SHIBATA, Shiro, NIPPON PISTON RING CO., LTD., Saitama-shi, Saitama 338-8503 (JP); HITOSUGI, Hideshi, NIPPON PISTON RING CO., LTD., Saitama-shi, Saitama 338-8503 (JP)
(74) Representative: Needle, Jacqueline
(86) International application number: PCT/JP2003/013766
(87) International publication number: WO 2004/040174

(56) References cited:
- DE-A1- 4 429 649
- DE-C1- 19 939 002
- JP-A- 9 144 881
- JP-U- 4 095 169
- JP-U- 4 095 169
- JP-U- 57 063 951
- JP-U- 57 063 951
- JP-U- 60 097 345
- JP-U- 60 097 345
- US-A- 2 554 289
- PATENT ABSTRACTS OF JAPAN vol. 1997, no. 10, 31 October 1997 (1997-10-31) & JP 09 144881 A (TEIKOKU PISTON RING CO LTD), 3 June 1997 (1997-06-03)

## Description

The present invention relates to an oil ring for an internal combustion engine.

In an internal combustion engine, in order to enhance fuel economy, it is important to reduce friction in a piston. In a piston ring of the internal combustion engine, it is required to enhance the quality of a pressure ring and the oil ring to reduce the friction. Also reduction of oil consumption is required as well as the reduction of the friction.

The oil ring performs a scraping-off function of lubricating oil and an oil control function of controlling the consumption of the lubricating oil. In order to enhance these functions of the oil ring, a technique for thinning the axial width of the oil ring has been developed.

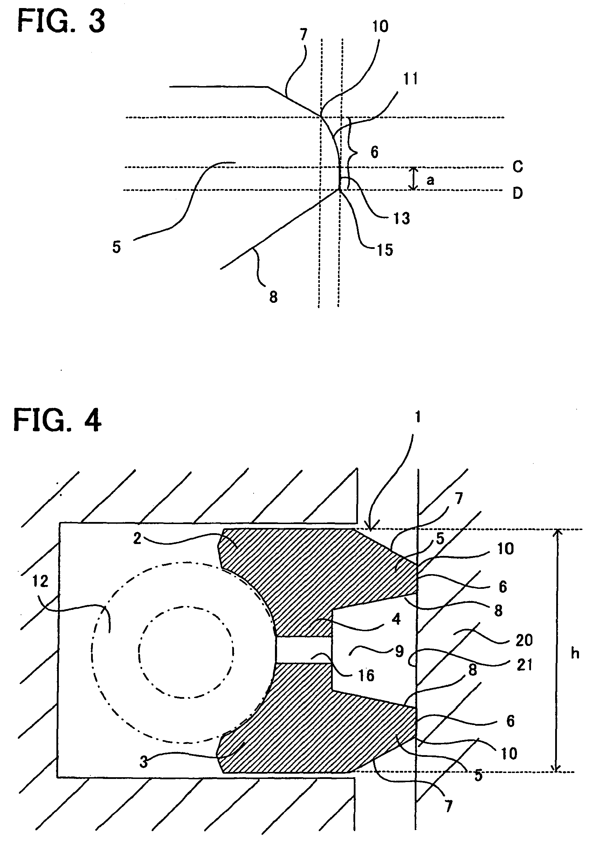

One example of a conventional thinned oil ring is shown in Figure 4. In this example, an oil ring 1 has two rails 2 and 3 which are connected to each other by a column shaped web 4 such that the oil ring has an I-shaped cross section. The two rails 2 and 3 are formed to be symmetric to one another. The oil ring 1 includes sliding projections 5 each provided at its tip end with a sliding surface 6 which slides with an inner wall 21 of a cylinder 20. An outer side surface 7 of the sliding projections forms outer side portions of the sliding projections 5, and an inner side surface 8 of the sliding projections forms inner side portions of the sliding projections 5. An outer peripheral groove 9 formed by connecting the rails 2 and 3 to each other by the web 4 is a groove in which oil scraped by the sliding surfaces 6 from a cylinder inner wall 21 is accommodated. The oil accommodated in the outer peripheral groove 9 passes through a large number of oil holes 16 formed in the web 4 and moves toward the inner periphery of the oil ring 1.

In order to reduce the consumption of lubricating oil with an oil ring having such a structure, the axial width of the oil ring, that is, the height h shown in Figure 4, is reduced, thereby enhancing the oil control function of the oil ring. As the height h is smaller, the friction is reduced, which is advantageous for reducing the consumption of the lubricating oil. However, unlike a three-piece oil ring, the sliding surface always tries to contact flatly to a bore in the structure of a two-piece oil ring. Therefore, a contact surface formed at an initial stage is maintained for a long term.

Since a wedge effect does not contribute to the flat surface, an oil film of the sliding surface is thin, and friction becomes larger when a thin oil film is sheared off by a flat wide surface.

Since the oil ring is operated with fluid lubricant in most regions of strokes, the velocity gradient in the oil film becomes larger when the oil film is thin, and the shearing force is increased as the velocity gradient is greater. Therefore, in a wide flat surface, friction becomes larger throughout the entire surface of a high shearing force generating region.

To avoid this, it is most important to reduce the contact width against a sliding surface.

Japanese Utility Model Publication No. 46-12405 discloses a piston ring having upper and lower rails whose axial widths of the piston ring are thick. The sliding surface of the piston ring is formed into a barrel like shape in order to prevent the seizing of the piston ring which may occur due to excessive pressure applied to an edge of the piston ring which comes into contact with an inner wall of the cylinder, when an inconvenience such as swinging, a lateral oscillation of the piston, accompanied by the vertical movement of the piston.

Japanese Patent Application Laid-open No. 2002-71021 discloses an oil ring having excellent oil consumption. In this publication, upper and lower rails of the oil ring are each provided with first and second tapered surfaces, and an angle between the lower rail side sliding surface and the second tapered surface is set larger than an angle of the upper rail. Thus, the oil film is increased when the ring moves upward and is reduced when the ring moves downward, thereby reducing the oil consumption. However, this oil ring has a problem that it is necessary to form the upper and lower tapers such that they become different from each other and to judge the direction when the oil ring is assembled, and the work operation becomes complicated.

JP 60 097345 U describes an oil ring comprising two rails connected to form a substantially I-shaped cross-section, wherein each of the two rails comprises a sliding projection which has an outer portion defining an outer side surface, and an inner portion defining an inner side surface, and a sliding surface, which slides on an inner wall of a cylinder, formed on a tip end of the sliding projection; and wherein the outer side surface and the sliding surface are joined at an outer edge portion which is formed into a curved surface.

The present invention seeks to provide an oil ring which is capable of reducing the sliding friction as compared to the prior art.

According to the present invention there is provided an oil ring comprising two rails connected by a columnar portion to form a substantially I-shaped cross-section, the width of the oil ring in its axial direction being in the range of 1 mm to 3mm,
wherein:
each of the two rails has a sliding projection which has an outer portion defining an outer side surface, an inner portion defining an inner side surface, and a sliding surface formed on a tip end of the sliding projection, the sliding surface of the sliding projection for sliding on an inner wall of a cylinder;
the taper angle of the outer side surface is in the range of 10° to 60°;
the taper angle of the inner side surface is in the range of 0° to 30°;
the outer side surface and the sliding surface are joined at an outer edge portion which is formed into a curved surface;
wherein the sliding surface has a sliding portion which extends from the outer edge portion to the inner side surface, and the sliding surface is curved along its extent, and
wherein the width of the sliding surface of the oil ring in the radial direction of the oil ring is in the range 3µm to 30µm.

With embodiments of the present invention the sliding friction is reduced by providing a sliding surface which is curved along its extent. The outer edge portion is also curved. With this configuration, the outer edge portion can be formed into a more gently curved surface. Therefore, when the oil ring is adversely inclined and obliquely contacts against the cylinder inner wall, it is possible to prevent excessive pressure being applied at the outer edge portion, this also has the effect of reducing the sliding friction.

Because the entire extent of the sliding surface is curved, the sliding surface always comes into contact with the cylinder inner wall at its curved surface and thus, the compliance to the cylinder inner wall is excellent, and the sliding friction can be reduced.

The specified radial width of oil rings of the invention enables the sliding friction to be reduced without deteriorating the scraping-off function of lubricating oil and the oil control function of the oil ring.

In a preferred embodiment, an inner edge portion where the inner side surface and the sliding surface are joined is formed into a curved surface, and the sliding surface has an inner curved surface sliding portion which is joined to the inner side surface and formed into a gently curved surface.

By setting the taper angle 13 of the inner side surface in the range of 0° to 30°, the angle in the oil ring formed by the sliding surface and the inner side surface can largely be secured. This makes it possible to prevent excessive pressure from concentrating and together with the shape of the sliding surface, the sliding friction can be reduced.

Embodiments of the present invention will hereinafter be described, by way of example, with reference to the accompanying drawings, in which:
Figure 1 is a schematic sectional view showing an embodiment of an oil ring of the present invention,
Figure 2 is an enlarged view of a sliding projection of the oil ring of Figure 1,
Figure 3 shows another example of a sliding projection which is not an embodiment of the invention,
Figure 4 is a schematic sectional view showing one example of a conventional oil ring,
Figure 5 is a schematic sectional view showing an outer edge portion in contact with a cylinder inner wall when the conventional oil ring is inclined,
Figures 6A and 6B are schematic sectional views showing other examples of an oil ring of the invention,
Figure 7 is a schematic sectional view showing that even if the oil ring of the present invention is inclined, edge contact does not occur,
Figure 8 is a schematic sectional view showing another example of an oil ring which is not an embodiment of the invention, Figure 9, is an explanatory view showing another example of a sliding projection which is not an embodiment of the invention,
Figure 10 is a graph showing mechanical loss (FMEP) of an oil ring of the invention with respect to the number of engine revolution, and
Figure 11 is a graph showing an oil consumption rate of the oil ring in the example of the present invention.

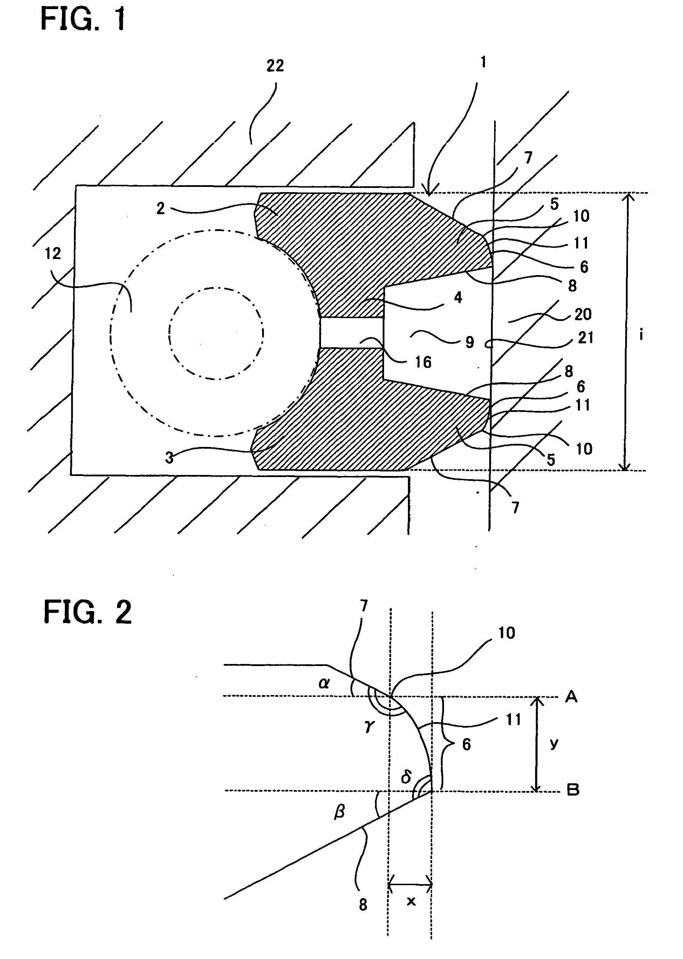

Figure 1 is a schematic sectional view showing an embodiment of an oil ring 1 of the invention. The oil ring 1 is formed into a substantially I -shaped cross-section defined by two rails 2 and 3 connected at a columnar portion web 4. The two rails 2 and 3 are formed symmetric to each other.

The oil ring 1 comprises sliding projections each provided at its tip end with sliding surfaces 6 which slide on an inner wall 21 of a cylinder 20. Each of the sliding projections 5 comprises an outer side surface 7 which forms an outer portion of the sliding projection 5, and an inner side surface 8 which forms an inner portion. An outer peripheral groove 9, which is formed by connecting the rails 2 and 3 to each other by the web 4, is a groove in which lubricating oil scraped off by the sliding surface 6 from the cylinder inner wall 21 is accommodated. The lubricating oil accommodated in the outer peripheral groove 9 passes through a large number of oil holes 16 formed in the web 4, and moves toward the inner periphery of the oil ring 1.

The sliding surface 6 and the outer side surface 7 of the sliding projection 5 are joined to each other at an outer edge portion 10 which is formed into a curved surface. The sliding surface 6 comprises a curved surface sliding portion 11 which is joined to the outer side surface 7 and is formed into a gently curved surface. A taper angle of the outer side surface 7 is formed to be in a predetermined range.

In the present embodiment, by forming the sliding projection 5 into the above described shape, when the oil ring 1 is inclined, sliding friction generated when the outer edge portion 10 comes into strong contact with the cylinder inner wall 21 is prevented from being increased.

That is, if inconvenience is generated such as fluttering in which the oil ring 1 is lifted in the groove of the piston 22 and is brought into unstable state, the oil ring 1 is vertically moved in the groove of the piston 22 and is inclined. If the oil ring 1 is inclined in this manner, the outer edge portion 10 of either one of the upper and lower rails 2 and 3 is pushed against the cylinder inner wall 21 strongly. Therefore, there is a problem that the sliding friction is increased. Further, such increase of the sliding friction leads to inconvenience such as an increase of the consumption of the lubricating oil, and deterioration of the oil control function.

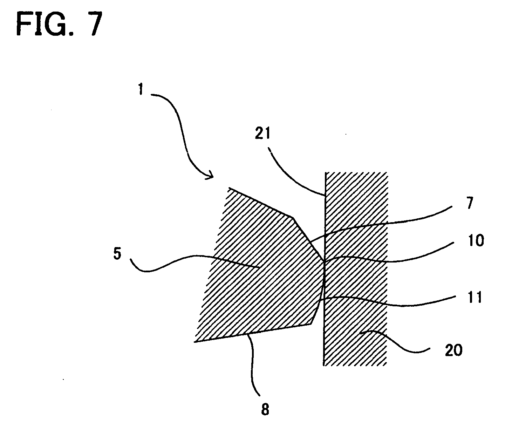

Figure 7 is a schematic sectional view showing a state in which the outer edge portion is in contact with the cylinder inner wall when the oil ring is inclined. When so inclined, outer edge portions 10 of the upper and lower rails come into contact with the cylinder inner wall 21 at their curved surfaces. Thus, it is possible to prevent excessive pressure from concentrating on the outer edge portions 10. By this means, the oil ring can reduce the sliding friction.

Furthermore, Figure 1 shows a coil expander 12 which comes into contact with the inner periphery of the oil ring 1 having the above structure, urges the oil ring 1 radially outward, thereby pushing the oil ring against the cylinder inner wall 21. Figure 1 shows an example of the two-piece oil ring comprising the oil ring 1 and the coil expander 12.

Figure 2 shows an embodiment of a sliding projection 5 of the oil ring of Figure 1. A taper angle α is in the range 14° to 60°, more preferably in the range 15° to 45°. This taper angle α is of the outer side surface of the sliding projection and is formed between the outer sloped surface of the sliding projection and the radial direction of the oil ring. More specifically, as shown in Figure 2, the taper angle α is formed between a straight line A which is parallel to the radial direction of the oil ring, and the outer side surface of sliding projection 7.

When the taper angle of the outer side surface of a sliding projection is out of the above range, the possibility that the sliding projection may be chipped when the oil ring is assembled into the cylinder is increased. Then, the cylinder inner wall may be scratched whereby the sealing performance is deteriorated.

Moreover, by making the tape angle α of the outer side surface of sliding projection within the above range, the angle of the outer edge portion, that is the angle γ formed between the outer side surface of sliding projection 7 and the sliding surface 6 can largely be secured as shown in Figure 2. Therefore, even if the oil ring is inclined and the outer edge portion is strongly pushed against the cylinder inner wall, it is possible to prevent high pressure from concentrating on a small area and thus, the sliding friction can be prevented from increasing.

The taper angle β of the inner side surface of sliding projection which forms the inner portion of the sliding projection is in a range of 0° to 30°. This taper angle β of the inner side surface of sliding projection is the angle formed between the inner sloped surface of the sliding projection and the radial direction of the oil ring. More specifically, as shown in Figure 2, the taper angle β is formed between a straight line B, which is parallel to the radial direction of the oil ring, and the inner side surface of sliding projection 8. By making the taper angle β of the inner side surface of sliding projection within this range, an angle δ of the joining portion between the sliding surface and the inner side surface of sliding projection, that is, as shown in Figure 2, the angle δ formed between the inner side surface of sliding projection 8 and the sliding surface 6 can largely be secured. Thus, when the joining portion contacts with the cylinder inner wall, pressure is prevented from concentrating on this portion, and the sliding friction can be reduced. Further, since the working is easy, this is advantageous for the producing efficiency.

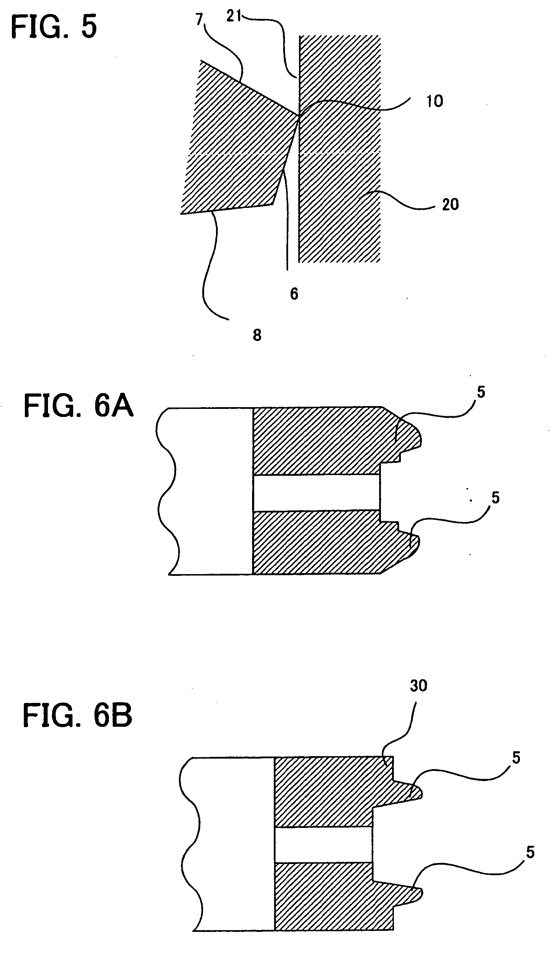

As set out above, the outer edge portion 10 of the sliding projection 5 is formed into the curved surface. Conventionally, and as shown in Figure 4, the outer edge portion 10 was formed in a horn-like shape. If the outer edge portion has a horn-like shape, when the oil ring is inclined and contacts obliquely against the cylinder inner wall, the outer edge portion 10 comes into contact with the cylinder inner wall 21 at its edge portion as shown in Figure 5. By this, excessive pressure concentrates on the outer edge portion 10 and thus, the sliding friction is largely increased, With the invention, however, since the outer edge portion 10 is formed into the curved surface, it is possible to prevent excessive or extreme pressure from concentrating on the outer edge portion. As a result, the sliding friction can be reduced. With the synergistic effect with the taper angle α of the above mentioned outer side surface of sliding projection, it is possible to improve the effect of preventing the sliding friction from increasing.

As shown in Figure 2, the sliding surface 6 comprises a curved surface sliding portion 11 which is joined to the outer side surface 7 and is formed into a gently curved surface. The entire sliding surface 6 forms the curved surface sliding portion 11 as shown in Figure 2. The arrangement of Figure 3 in which only a portion 11 of the sliding surface 6 is curved and the remaining portion is a flat surface 13 is not an embodiment of the invention.

By forming the entire sliding surface as a curved surface, the sliding surface always comes into contact with the cylinder inner wall at its curved surface. Therefore, the compliance to the cylinder inner wall is excellent, the scraping-off function of lubricating oil and the oil control function can be enhanced, and the sliding friction can be reduced.

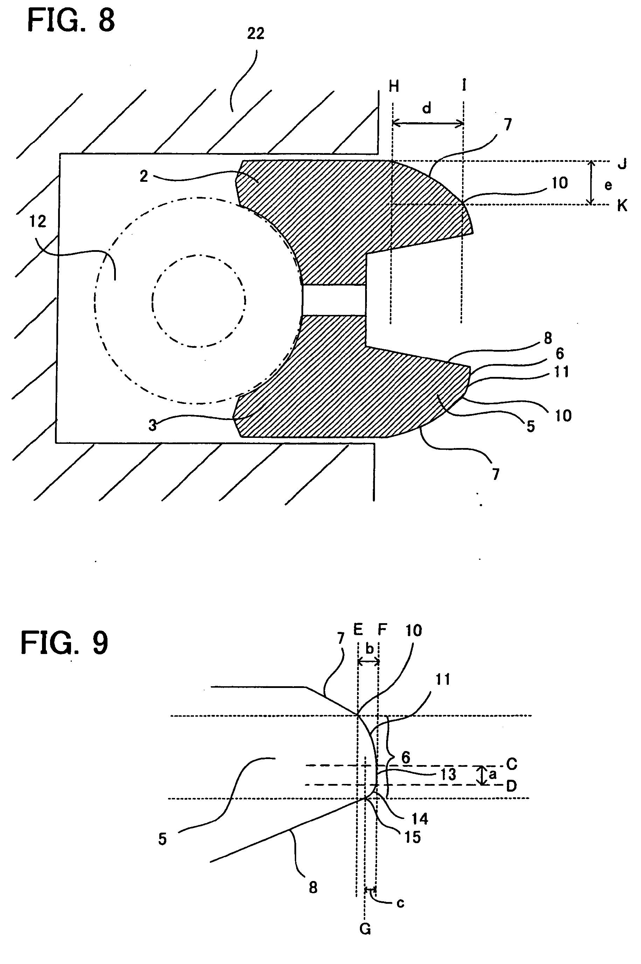

The sliding surface may be provided with an inner curved surface sliding portion in addition to the above mentioned curved surface sliding portion as illustrated in Figure 9.

Figure 9 as illustrated is not an embodiment of the invention. In Figure 9 the sliding surface 6 comprises the curved surface sliding portion 11 which extends from the outer edge portion 10, a flat surface sliding portion 13 which extends from the curved surface sliding portion 11, and an inner curved surface sliding portion 14 which extends from the flat surface sliding portion 13. However, and in accordance with the invention, the flat surface sliding portion 13 may be omitted and the curved surface sliding portion 11 and the inner curved surface sliding portion 14 may be formed continuously so that the entire sliding surface 6 is curved from the outer edge portion 10 to the inner edge portion 15. The provision of a curved inner edge portion 15 ensures that when the oil ring is inclined and contacts against the cylinder inner wall obliquely, it is possible to prevent excessive pressure from concentrating on one point and the sliding friction can be reduced.

In the embodiment of Figure 2, the width x in the radial direction of the oil ring (the "barrel height"), which is between the junction of the curved sliding surface 6 and the outer side surface 7, and the junction of the curved sliding surface 6 and the inner side surface 8 is in the range 3µm to 30µm, preferably in the range 10µm to 20µm. By setting the width of the sliding surface in the radial direction of the oil ring within the above range, it is possible to reduce the sliding friction without deteriorating a function of the oil ring.

The width of the sliding surface in the radial direction of the oil ring, again the "barrel height", when the inner curved surface sliding portion 14 is provided is shown as width b in Figure 9. The width b is the distance between a straight line E parallel to the axial direction of the oil ring which crosses the outer edge portion 10, and a straight line F parallel to the axial direction of the oil ring which crosses the outermost portion in the radial direction of the oil ring of the curved surface sliding portion 11. The width b is in the range of 3µm to 30µm, preferably in the range 10µm to 20µm.

As shown in Figure 9, the width c of the inner curved surface sliding portion 14 in the radial direction of the oil ring, between a straight line G parallel to the axial direction of the oil ring which crosses the inner edge portion 15, and a straight line F parallel to the axial direction of the oil ring which crosses the outermost portion in the radial direction of the oil ring of the inner curved surface sliding portion 14, is preferably in the range 3µm to 100µm, more preferably in the range 3µm to 50µm, preferably in the range 3µm to 30µm, and preferably in the range 5µm to 15µm.

When the inner curved surface sliding portion is provided, though relation between a width of the curved surface sliding portion in the radial direction of the oil ring and a width of the inner curved surface sliding portion in the radial direction of the oil ring, that is, relation between a distance b and the distance c shown in Figure 9 is not particularly limited, it is preferable that the distance b is larger than the distance c. This is because the sliding friction can be reduced and the working is easy.

Next, a width of the sliding surface in the axial direction of the oil ring will be explained. The sliding surface width in the axial direction of the oil ring is width y between a straight line A parallel to the radial direction of the oil ring which crosses the outer edge portion 10 and a straight line B parallel to the radial direction of the oil ring which crosses a joining portion of the sliding surface 6 and the inner side surface 8. This width y is equal to the sum of the widths of the two rails 2 and 3. The width y in the axial direction may be in the range of 0.05mm to 0.3mm, more preferably in a range of 0.1 mm to 0.2mm. In order to reduce the weight of the piston ring and to reduce the oil consumption, generally in an oil ring, it is preferable to reduce the width of the oil ring in its axial direction. When the sliding surface width is in the above range, this requirement can be satisfied. Further, as the width of the oil ring becomes thinner, the possibility of fluttering of the oil ring in the high speed revolution region of the piston becomes higher, and the sliding friction may be increased. In the present embodiment, such a problem caused by reducing the width of the oil ring can sufficiently be prevented.

The width i of the oil ring in the axial direction, as shown in Figure 1, is in the range 1mm to 3mm, more preferably in the range 1.2mm to 2mm. The width i is from the upper surface of the upper rail 2 to the lower surface of the lower rail 3.

The tension of the oil ring is not particularly limited as long as the oil ring can suitably urge the cylinder inner wall. It is preferable that an oil ring tension ratio (N/mm), a value obtained by dividing the oil ring tension (N) by the ring bore diameter (mm), is 0.5N/mm or lower, and preferably 0.2N/mm or lower. An oil ring having the tension in the above range is generally called a low tension oil ring. This is because in such a low tension oil ring, the fluttering is less likely to be generated in the oil ring in the low speed revolution region of the piston, but the fluttering is likely to be generated in the high speed revolution range, and the effect of the embodiment can sufficiently be exhibited.

It is required that its sliding projections have the above described shape, but otherwise the shape of the oil ring can be chosen as required. For example, the oil ring can have a shape in which the inner portions of the sliding projections 5 are formed in a stepwise shape as shown in Figure 6(A). Alternatively, the oil ring can have a shape in which the sliding projections 5 are provided inward in the axial direction of the oil ring 1 and generally called shoulders 30 are formed axially outward as shown in Figure 6(b).

A surface treatment film may be carried out on the sliding surface and on the sliding projection. It is preferable to form a gas nitride film, an ion nitride film, an ion plating film, a diamond-like carbon film, or a hard carbon film containing metal. The gas nitride film may be formed over the entire periphery if a mask is not used. The gas nitride film may be formed on only an outer periphery or on the entire periphery, and a location where the film is formed may be appropriately selected.

An ion nitride film or an ion plating film among the above surface treatment is preferably formed only on the outer peripheral surface. Specific examples of types of the ion plating film are a Cr-N type film, a Cr-B-N type film, a Ti-N type film and the like.

The material for forming the oil ring may be chosen as required as long as it has an appropriate toughness.

The oil ring may be a one-piece oil ring comprising only the oil ring having the above mentioned composition, or may be a two-piece oil ring in which the oil ring is combined with the expander which urges the oil ring radially outward.

The present invention will be further explained, by reference to the following example:

An example of an oil ring was tested using a unit tester to determine the mechanical loss (FMEP) caused by friction. The oil ring was set in a piston, running-in was carried out, and then, the friction was measured by changing the number of revolution, which corresponds to engine speed, at the oil temperature of 80°.

For the oil ring used in the example, a wire rod for a piston ring comprising the following elements was used: Cr: 8.0wt%, C: 0.72wt%, Si: 0.25wt%, Mn: 0.28wt%, P: 0.02wt%, S: 0.01wt% and other unavoidable impurities. The piston ring wire rod was subjected to a drawing and known working (grinding and the like), and the surface was further subjected to gas nitriding to form a diffused layer of Hv700 or more and thickness of 100µm. A barrel amount (barrel height) was adjusted by adjusting the angle of a set jig and processing time, and an outer peripheral sliding surface was subjected to barrel working.

A specification of the piston ring produced by the above method is as follows (for y, α and β, see Figure 2).
Oil ring d1: 81mm, h1: 2mm, a1: 2mm,
Width y of rail = 0.2mm
Chamfering angle α: 25°, Chamfering angle β: 10°
Abutment gap: 0.1 mm
Tension ration of oil ring is 0.19N/mm

Further, a wire rod of Φ0.6mm was used for an expander, a diameter of the expander was 1.5mm and pitch thereof was 0.6mm.

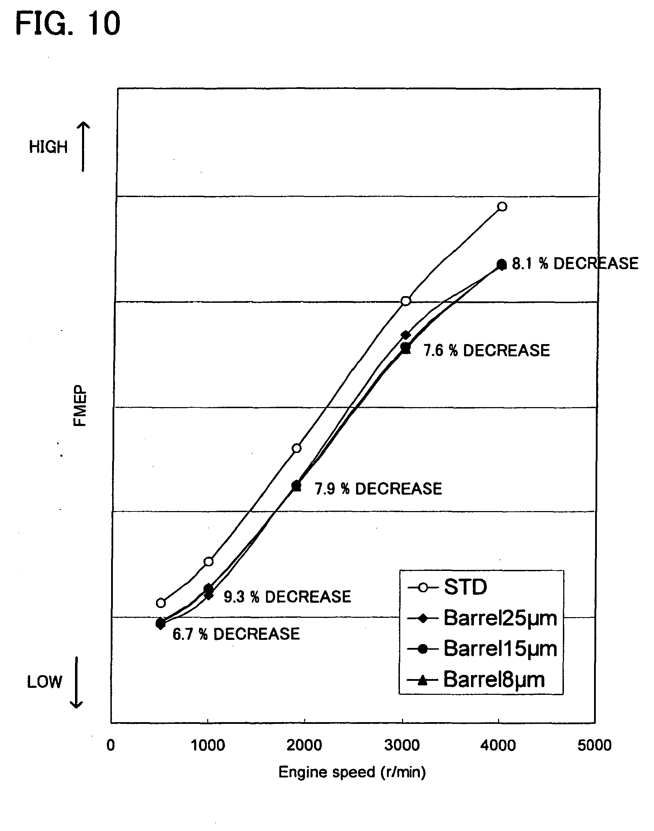

In the present example, the FMEP of the following four kinds of oil rings were measured: an oil ring which was not subjected to the barrel processing (STD), and three oil rings each having values of (barrel height) x in Figure 2 of 8µm, 15µm and 25µm. A result of the measurement is shown in Figure 10.

It is obvious from Figure 10 that the oil rings having the barrel surfaces have lower FMEP than the STD in any of the revolution ranges, irrespectively of the barrel height. In order to maintain the contacting width at a small value, it is preferable that the barrel amount (barrel height) is high. From the above, it is obvious that the friction can be reduced by forming the sliding surface into a barrel-faced shape.

### Test using actual machine

For the above oil rings, the consumption of oil was confirmed using a four-cylinder gasoline engine having displacement of 2694cc and bore diameter of Φ95mm.

The combination of piston rings used in this test is as follows: a first ring was made of 10Cr material having h1 of 1.2mm, a1 of 2.9mm and subjected to the gas nitriding, and a second ring was made of FC material and having h1 of 1.2mm and a1 of 3.4mm. Oil rings having the same specification (STD and barrel specification) of the outer peripheral shape as those used in the unit test. In this test, the specifications of the first and second rings are constant, and only the oil rings were changed. As the oil rings, barrel-faced shaped oil rings having the (barrel height) x values within a range of 15 to 20µm were used.

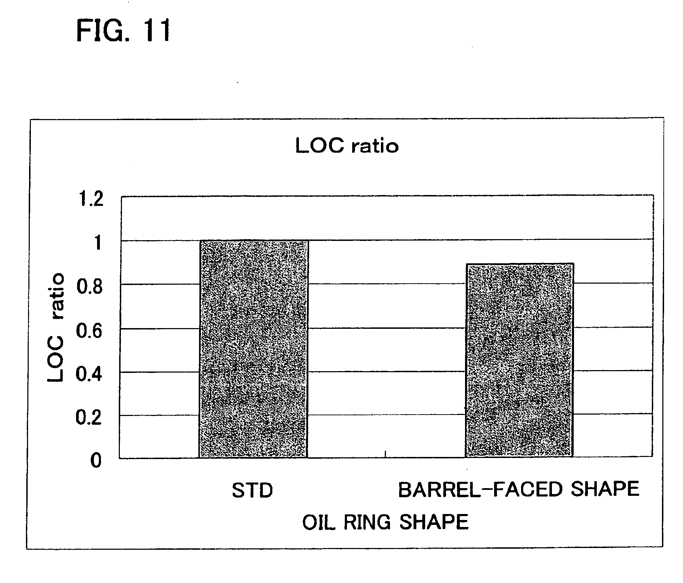

At WOT (full load) and number of engine revolution of 5200rpm, a value of the consumption of oil (g/h) using the STD oil ring was defined as 1, as the test result using the barrel-faced shaped oil ring was obtained as indexes (oil consumption ratio). A result thereof is shown in Figure 11.

From this result, it is obvious that the test result using the barrel shaped oil ring has low value of the oil consumption ratio and excellent result can be obtained. A difference of the values was about 11%.

## Claims

1. An oil ring (1) comprising two rails (2, 3) connected by a columnar portion (4) to form a substantially I-shaped cross-section, the width (i) of the oil ring (1) in its axial direction being in the range of 1 mm to 3mm,
wherein:
each of the two rails (2, 3) has a sliding projection (5) which has an outer portion defining an outer side surface (7), an inner portion defining an inner side surface (8), and a sliding surface (6) formed on a tip end of the sliding projection (5), the sliding surface (6) of the sliding projection (5) for sliding on an inner wall (21) of a cylinder;
the taper angle (α) of the outer side surface (7) is in the range of 10° to 60°;
the taper angle (β) of the inner side surface (8) is in the range of 0° to 30°;
the outer side surface (7) and the sliding surface (6) are joined at an outer edge portion (10) which is formed into a curved surface;
wherein the sliding surface (6) has a sliding portion (11) which extends from the outer edge portion (10) to the inner side surface (8), and the sliding surface (6, 11) is curved along its extent, and
wherein the width (x, b) of the sliding surface (6, 11) of the oil ring in the radial direction of the oil ring is in the range 3µm to 30µm.

2. An oil ring (1) as claimed in Claim 1, wherein an inner edge portion (15) where the inner side surface (8) and the sliding surface (6) are joined is formed into a curved surface, and the sliding surface (6) has an inner curved surface sliding portion (14) which is joined to the inner side surface (8) and formed into a gently curved surface.

## Patentansprüche

1. Ölring (1), umfassend zwei durch einen säulenförmigen Abschnitt (4) verbundene Schienen (2, 3) zur Ausbildung eines im Wesentlichen I-förmigen Querschnitts, wobei die Breite (i) des Ölrings (1) in dessen Axialrichtung im Bereich von 1 mm bis 3 mm liegt,
wobei:
jede der beiden Schienen (2, 3) einen Gleitvorsprung (5) aufweist, der einen eine Außenseitenfläche (7) begrenzenden Außenabschnitt, einen eine Innenseitenfläche (8) begrenzenden Innenabschnitt und eine an einem spitzen Ende des Gleitvorsprungs (5) ausgebildete Gleitfläche (6) aufweist,
wobei die Gleitfläche (6) des Gleitvorsprungs (5) an einer Innenwand (21) des Zylinders gleitet;
wobei der Fasenwinkel (α) der Außenseitenfläche (7) im Bereich von 10° bis 60° liegt;
der Fasenwinkel (β) der Innenseitenfläche (8) im Bereich von 0° bis 30° liegt;
die Außenseitenfläche (7) und die Gleitfläche (6) an einem zu einer gekrümmten Fläche ausgebildeten Außenrandabschnitt (10) zusammengefügt sind;
wobei die Gleitfläche (6) einen Gleitabschnitt (11) aufweist, der sich von dem Außenrandabschnitt (10) zu der Innenseitenfläche (8) erstreckt und die Gleitfläche (6, 11) entlang ihrer Erstreckung gekrümmt ist, und
wobei die Breite (x, b) der Gleitfläche (6, 11) des Ölrings in radialer Richtung des Ölrings im Bereich von 3 µm bis 30 µm liegt.

2. Ölring (1) nach Anspruch 1, wobei ein Innenkantenabschnitt (15) dort zu einer gekrümmten Fläche ausgebildet ist, wo die Innenseitenfläche (8) und die Gleitfläche (6) zusammengefügt sind, und die Gleitfläche (6) einen Gleitabschnitt (14) an einer gekrümmten Innenfläche aufweist, der mit der Innenseitenfläche (8) zusammengefügt ist und zu einer sanft gekrümmten Fläche ausgebildet ist.

## Revendications

1. Segment racleur (1) comprenant deux rails (2, 3) reliés par une partie en colonne (4) pour former une section transversale sensiblement en forme de I, la largeur (i) du segment racleur (1) dans sa direction axiale étant dans la plage de 1 mm à 3 mm,
dans lequel :
chacun des deux rails (2, 3) possède une saillie coulissante (5) qui possède une partie extérieure définissant une surface latérale extérieure (7), une partie intérieure définissant une surface latérale intérieure (8), et une surface coulissante (6) formée sur une extrémité de pointe de la saillie coulissante (5), la surface coulissante (6) de la saillie coulissante (5) pour coulisser sur une paroi intérieure (21) d'un cylindre ,
l'angle de conicité (α) de la surface latérale extérieure (7) est dans la plage de 10° à 60° ,
l'angle de conicité (β) de la surface latérale intérieure (8) est dans la plage de 0° à 30° ,
la surface latérale extérieure (7) et la surface coulissante (6) sont jointes dans une partie de bord extérieure (10) qui est formée dans une surface courbée ;
dans lequel la surface coulissante (6) possède une partie coulissante (11) qui s'étend à partir de la partie de bord extérieure (10) jusqu'à la surface latérale intérieure (8), et la surface coulissante (6, 11) est courbée le long de son étendue, et
dans lequel la largeur (x, b) de la surface coulissante (6, 11) du segment racleur dans la direction radiale du segment racleur est dans la plage de 3 µm à 30 µm.

2. Segment racleur (1) selon la revendication 1, dans lequel une partie de bord intérieure (15) où la surface latérale intérieure (8) et la surface coulissante (6) sont jointes est formée dans une surface courbée, et la surface coulissante (6) possède une partie coulissante de surface courbée intérieure (14) qui est jointe à la surface latérale intérieure (8) et formée dans une surface légèrement courbée.
